Europäisches Patentamt

European Patent Office

Office européen des brevets

(11) Veröffentlichungsnummer: **0 037 027**
**B1**

# (12) EUROPÄISCHE PATENTSCHRIFT

(45) Veröffentlichungstag der Patentschrift:
**27.12.84**

(21) Anmeldenummer: **81102084.1**

(22) Anmeldetag: **20.03.81**

(51) Int. Cl.³: **H 02 J 3/18**, G 05 F 1/70

(54) **Thyristorgesteilte Drosselspulenanordnung.**

(30) Priorität: **28.03.80 DE 3012015**

(43) Veröffentlichungstag der Anmeldung:
**07.10.81 Patentblatt 81/40**

(45) Bekanntmachung des Hinweises auf die Patenterteilung:
**27.12.84 Patentblatt 84/52**

(84) Benannte Vertragsstaaten:
**BE CH FR GB LI SE**

(73) Patentinhaber: **Tuttas, Christian, Luitpoldstrasse 22 a,
D-6748 Bad Bergzabern (DE)**

(72) Erfinder: **Tuttas, Christian, Luitpoldstrasse 22 a,
D-6748 Bad Bergzabern (DE)**

(56) Entgegenhaltungen:
**DE - A - 2 127 911
DE - A - 2 318 952
DE - A - 2 937 262
FR - A - 1 596 194
GB - A - 1 230 830
GB - A - 2 031 666
US - A - 3 222 592**

ACTORUM AG

## Beschreibung

### Technisches Gebiet

Die Erfindung bezieht sich auf eine thyristorgestellte Drosselspulenanordnung.

### Stand der Technik

Bei Anordnungen zur schnellen Blindleistungskompensation in Netzen der elektrischen Energieversorgung ist es bekannt, einen Parallelschwingkreis zu verwenden, welcher aus einer Kondensator- bzw. Filterbatterie und einer in ihrer Induktivität veränderbaren Drosselspule besteht. Die in ihrer Induktivität veränderbare Drosselspule wird, wie in FR-A-1 596 194 beschrieben, üblicherweise aus der Reihenschaltung einer linearen Drosselspule mit einem Thyristorsteller, der aus zwei antiparallel geschalteten Thyristoren besteht, gebildet. Wird der oben genannte Thyristorsteller an die Sekundärseite eines Transformators mit 100% Streureaktanz geschaltet, so erhält man die in GB-1 230 830 beschriebene Ausführung, die dasselbe Verhalten zeigt wie die zuerst genannte Anordnung. Anstelle von linearen Drosselspulen können auch nichtlineare Drosselspulen verwendet werden. DE-A-2 937 262 beschreibt eine Anordnung, die aus der Reihenschaltung einer sättigbaren Drosselspule mit dem oben bezeichneten Thyristorsteller besteht. Eine sättigbare Drosselspule verhält sich bis zu einer bestimmten Spannung, der Sättigungsspannung, wie eine lineare Drossel, während der Drosselstrom oberhalb der Sättigungsspannung überproportional ansteigt. Alle bislang genannten Varianten haben gemeinsam, dass bei der Dimensionierung das induktive Bauelement und der Thyristorsteller für dieselbe Leistung auszulegen sind.

### Aufgabe

Der Erfindung liegt die Aufgabe zugrunde, die Drosselspule derart auszubilden, dass der Thyristorsteller leistungsmässig geringer ausgelegt werden kann als die Drosselspule, ohne dass dadurch Stellgeschwindigkeit eingebüsst wird.

### Lösung

Die Aufgabe wird erfindungsgemäss durch die kennzeichnenden Merkmale des Anspruchs 1.

Zweckmässige Weiterbildungen der Erfindung sind den abhängigen Ansprüchen zu entnehmen.

### Vorteile

Die durch die Erfindung erzielten Vorteile bestehen insbesondere darin, dass aufgrund des nichtlinearen Verhaltens der Gesamtanordnung der Thyristorsteller nicht für die volle induktive Blindleistung der Drosselspule bemessen zu werden braucht. Die parallel zum Thyristorsteller liegende weitere Drosselspule braucht ebenfalls nur für einen Bruchteil der Nennleistung ausgelegt zu werden.

### Darstellung der Erfindung

Die Erfindung wird nachstehend anhand in der Zeichnung schematisch dargestellter Ausführungsbeispiele näher erläutert.

Es zeigen:

Fig. 1 die grundsätzliche Ausbildung der erfindungsgemässen Sättigungsdrosselspule mit Thyristorsteller

Fig. 2 ein Diagramm mit den Magnetisierungskennlinien der Sättigungsdrosselspule bei verschiedenen Betriebspunkten

Fig. 3 eine abweichende Ausbildung eines induktiven Spannungsteilers

Fig. 4 eine andere Ausbildung eines induktiven Spannungsteilers

Fig. 5 eine weitere Ausbildung eines induktiven Spannungsteilers

Fig. 6 eine weitere Ausbildung eines induktiven Spannungsteilers

Fig. 7 eine weitere Ausbildung eines induktiven Spannungsteilers.

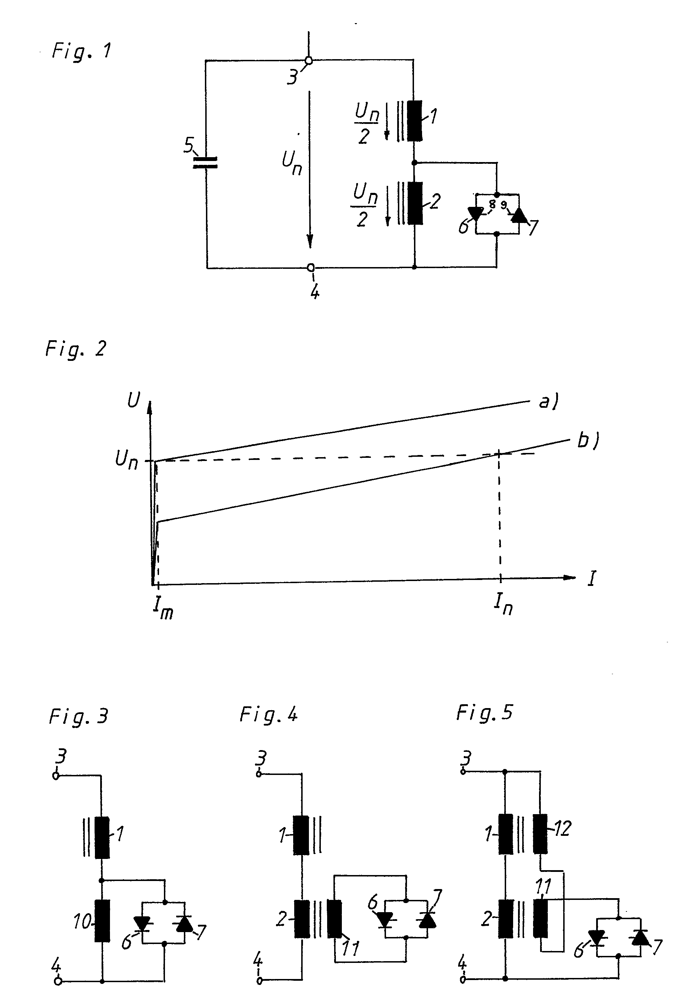

Die Ausbildung nach Fig. 1 besteht aus zwei beliebigen Sättigungsdrosselspulen 1, 2, welche in Reihe geschaltet sind und einen induktiven Spannungsteiler bilden. An die Klemmen 3, 4 ist eine Kondensatorbatterie 5 geschaltet. Mit $U_n$ ist die Netznennspannung bezeichnet. Die Sättigungsdrosselspulen 1, 2 können derart bemessen sein, dass sich an ihnen eine Spannungsaufteilung im Verhältnis 1 : 1 ergibt ($U_n/2$); beliebige andere Spannungsaufteilungen sind ebenfalls möglich.

Parallel zur Teil-Sättigungsdrosselspule 2 ist ein an sich bekannter Thyristorsteller geschaltet, der aus den antiparallelgeschalteten Thyristoren 6, 7 besteht, welche über ihre Gates 8, 9 gezündet werden (Phasenanschnittsteuerung).

Die Wirkungsweise der thyristorgestellten Sättigungsdrosselspule wird anhand der Fig. 2 näher erläutert. Die Kurve a stellt die resultierende Magnetisierungskennlinie der beiden Teil-Sättigungsdrosselspulen 1, 2 dar, während die Kurve b die Magnetisierungskennlinie der Teil-Sättigungsdrosselspule 1 ist. Die Netznennspannung $U_n$ braucht nicht unbedingt im Sättigungsknick der Magnetisierungskennlinie a zu liegen, wie dies in Fig. 2 angedeutet ist; sie kann auch oberhalb oder unterhalb des Sättigungsknicks zu liegen kommen.

Sind die Thyristoren 6, 7 nicht gezündet, so sind beide Teil-Sättigungsdrosselspulen 1, 2 wirksam, und es fliesst ein Magnetisierungsstrom $I_m$ (Kennlinie a). Bei voller Aussteuerung der Thyristoren 6, 7 (Betrieb bei maximalem Zündwinkel) wirkt nur die Teil-Sättigungsdrosselspule 1 und die Teil-Sättigungsdrosselspule 2 ist kurzgeschlossen, so dass der induktive Nennstrom $I_n$ (Kennlinie b) fliesst. Durch Verändern des Zündwinkels ist jeder Stromwert zwischen $I_m$ und $I_n$ einstellbar.

Nach Fig. 3 besteht der induktive Spannungsteiler aus einer Sättigungsdrosselspule 1 und einer linearen Drosselspule 10, zu der die Thyristoren 6, 7 parallelgeschaltet sind.

Bei der Ausbildung nach der Fig. 4 sind die beiden Thyristoren 6, 7 an die Teil-Sättigungsdrosselspule 2 transformatorisch über eine Wicklung 11 angekoppelt.

Bei der Ausbildung nach Fig. 5 besitzen die Sättigungsdrosselspulen 1, 2 zusätzlich Sekundärwicklungen 11 und 12, die entgegengesetzt in Reihe geschaltet sind und ebenfalls über einen Thyristorsteller an die Netzspannung (Klemmen 3 und 4) angeschlossen werden können.

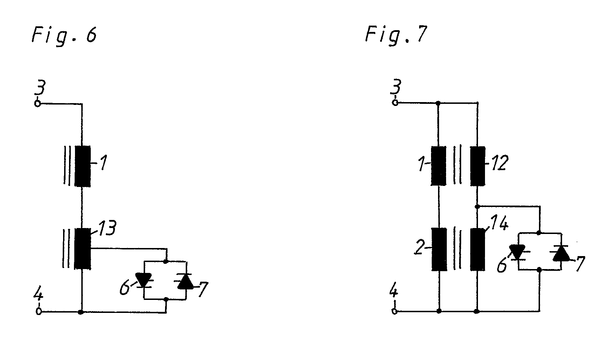

Bei der Ausbildung nach Fig. 6 besteht der induktive Spannungsteiler aus einer Sättigungsdrosselspule 1 und einem Spartransformator 13, dessen Oberspannungsseite mit der Sättigungsdrosselspule 1 in Reihe geschaltet ist. Der Thyristorsteller befindet sich auf der Unterspannungsseite des Spartransformators 13.

Bei der Ausbildung nach Fig. 7 besitzen die Sättigungsdrosselspulen 1 und 2 zusätzlich Sekundärwicklungen 11 und 14, die in Reihe geschaltet ebenfalls an Netzspannung (Klemmen 3 und 4) liegen. Parallel zur Wicklung 14 ist der Thyristorsteller geschaltet.

Die Sättigungsdrosselspulen sind sinngemäss auch als Dreiphaseneinheiten ausbildbar. Dabei können die Teildrosselspulen elektrisch sowie magnetisch unterschiedlich angeordnet sein. Die einzelnen Wicklungen können beispielsweise im Stern, im Dreieck oder im Zickzack angeordnet sein. Sie können sich auf sechs Einzelkernen oder auf Mehrschenkeleisenkernen befinden.

## Patentansprüche

1. Thyristorgestellte Drosselspulenanordnung, dadurch gekennzeichnet,
– dass zu einer Sättigungsdrosselspule (1) eine weitere Drosselspule (2) zur Bildung eines induktiven Spannungsteilers in Reihe geschaltet ist und dass die weitere Drosselspule (2) durch einen in Phasenanschnittsteuerung betriebenen Thyristorsteller (6, 7) kurzschliessbar ist
– und dass durch den Thyristorsteller (6, 7) die Spannung an der Sättigungsdrosselspule (1), ausgehend von einem durch das Spannungsteilerverhältnis der Drosselspulen (1, 2) gegebenen niedrigen Wert, erhöht werden kann, wodurch eine Steuerung des Stromes der Sättigungsdrosselspule (1) ermöglicht wird.

2. Drosselspulenanordnung nach Anspruch 1, dadurch gekennzeichnet, dass die weitere Drosselspule (2) ebenfalls eine Sättigungsdrosselspule ist.

3. Drosselspulenanordnung nach Anspruch 2, dadurch gekennzeichnet, dass die weitere Drosselspule (2) als Transformator ausgebildet ist, an dessen Sekundärwicklung (11) der Thyristorsteller angeschlossen ist (Fig. 4).

4. Drosselspulenanordnung nach Anspruch 2, dadurch gekennzeichnet, dass die weitere Drosselspule als Spartransformator (13) ausgebildet ist, dessen Sekundärseite vom Thyristorsteller (6, 7) überbrückt ist (Fig. 6).

5. Drosselspulenanordnung nach Anspruch 3, dadurch gekennzeichnet, dass die Sättigungsdrosselspule (1) und die weitere Drosselspule (2) mit entgegengesetzt in Reihe geschalteten Sekundärwicklungen (11, 12) ausgestattet sind, die in Reihe mit dem Thyristorsteller (6, 7) ebenfalls an die Netzspannung (3, 4) angeschlossen sind (Fig. 5).

6. Drosselspulenanordnung nach Anspruch 3, dadurch gekennzeichnet, dass die Sättigungsdrosselspule (1) und die weitere Drosselspule (2) mit in Reihe geschalteten, an die Netzspannung (3, 4) angeschlossenen Sekundärwicklungen (12, 14) ausgestattet sind und an der Sekundärwicklung (14) der weiteren Drosselspule der Thyristorsteller (6, 7) parallel geschaltet ist.

7. Drosselspulenanordnung nach Anspruch 1, dadurch gekennzeichnet, dass diese aus einer Reihenschaltung einer Sättigungsdrosselspule (1) mit einer linearen Drosselspule (10) besteht, welcher der Thyristorsteller (6, 7) parallel geschaltet ist (Fig. 3).

## Claims

1. Thyristor controlled inductor arrangement, characterized through the fact
– that a saturated reactor (1) is connected in series with a second reactor (2), to form an inductive voltage divider and that the second reactor (2) can be short-circuited by a thyristor-arrangement (6, 7) with phase angle control
– and that through the thyristor arrangement (6, 7) the voltage across the saturated reactor (1), given by the inductive voltage divider (1, 2) can be rised, through which the control of the current of the saturated reactor (1) is possible.

2. Inductor arrangement as in claim 1, characterized through the fact, that the second reactor (2) is a saturated reactor too.

3. Inductor arrangement as in claim 2, characterized through the fact, that the second reactor (2) is formed as a transformer with a secondary winding (11), which can be short circuited by the thyristor arrangement (Fig. 4).

4. Inductor arrangement as in claim 2, characterized through the fact, that the second reactor is formed as an autotransformer (13), the sondary side of which can be short circuited by the thyristor arrangement (Fig. 6).

5. Inductor arrangement as in claim 3, characterized through the fact, that the saturated reactor (1) and the second reactor (2) have inverse series connected secondary windings (11, 12), which are connected in series with a thyristor arrangement (6, 7) to the network voltage (3, 4).

6. Inductor arrangement as in claim 3, characterized through the fact, that the saturated reactor (1) and the second reactor (2) have series connected secondary windings (12, 14), connected together to the network voltage (3, 4) and that the thyristor arrangement (6, 7) is parallel with the secondary winding (14) of the second reactor.

7. Inductor arrangement as in claim 1, characterized through the fact, that the saturated reactor (1) is connected in series with a linear reactor (10), which is parallel to the thyristor arrangement (6, 7) (Fig. 3).

## Revendications

1. Dispositif thyristorisé composé de bobines de réactance caractérisé par le fait

– qu'une bobine de réactance (1) est couplée en série avec une autre bobine de réactance (2) afin de constituer un diviseur de tension inductif et par le fait qu'il est possible de court-circuiter l'autre bobine de réactance (2) à l'aide d'un thyristor de réglage (6 et 7) fonctionnant par réglage de phase,

– et par le fait qu'il est possible d'augmenter la valeur de la tension appliquée à la bobine de réactance saturée (1), à l'aide du thyristor de réglage (6 et 7), augmentation qui s'effectue à partir d'une valeur basse de la tension obtenue par la répartition des tensions aux bobines de réactance.

2. Dispositif composé de bobines de réactance selon la revendication 1, caractérisé par le fait que l'autre bobine de réactance (2) est aussi une bobine de réactance saturée.

3. Dispositif composé de bobines de réactance selon la revendication 2, caractérisé par le fait que l'autre bobine de réactance (2) peut être exécutée en tant que transformateur, le thyristor de réglage étant raccordé à l'enroulement secondaire (11) de ce dernier (fig. 4).

4. Dispositif composé de bobines de réactance selon la revendication 2, caractérisé par le fait que l'autre bobine de réactance est exécutée en tant qu'autotransformateur (13) dont le côté secondaire est court-circuité par le thyristor de réglage (6 et 7).

5. Dispositif composé de bobines de réactance selon la revendication 3, caractérisé par le fait que la bobine de réactance saturée (1) et l'autre bobine de réactance (2) sont munis d'enroulements secondaires inversement couplés en série, les enroulements secondaires (11 et 12) étant montés en série avec le thyristor de réglage (6 et 7) et étant également raccordés à la tension du réseau (3 et 4) (fig. 5).

6. Dispositif composé de bobines de réactance selon la revendication 3, caractérisé par le fait que la bobine de réactance saturée (1) et l'autre bobine de réactance (2) sont munis d'enroulements secondaires (12 et 14) montés en série et raccordés à la tension du réseau (3 et 4) et par le fait que le thyristor de réglage est monté en parallèle avec l'enroulement secondaire (14) de l'autre bobine de réactance.

7. Dispositif composé de bobines de réactance selon la revendication 1, caractérisé par le fait que le dispositif est composé d'un couplage en série d'une bobine de réactance saturée (1) avec une bobine de réactance linéaire (10), le thyristor de réglage étant monté en parallèle avec cette dernière (fig. 3).

*Fig. 1*

*Fig. 2*

*Fig. 3*          *Fig. 4*          *Fig. 5*

Fig. 6

Fig. 7